# EUROPEAN PATENT APPLICATION

(11) **EP 0 884 237 A1**
(43) Date of publication of application: **16.12.1998**
(21) Application number: 97109562.5
(22) Date of filing: 11.06.1997
(51) Int. Cl.: B62J 6/12, H02K 21/24

(54) **Bicycle generator**

(71) Applicant: INDUSTRIAL TECHNOLOGY RESEARCH INSTITUTE, Chutung, Hsinchu 31015 (TW)
(72) Inventor: Chen, Shih-Chou, Hsinchu City (TW); Wu, Tung-Chuan, Hsinchu City (TW); Weng, Chen-Sheng, Hsinfeng Hsiang, Hsinchu Hsien (TW); Chen, Ray-Ten, Tsupei City, Hsinchu Hsien (TW)
(74) Representative: TER MEER STEINMEISTER & PARTNER GbR

(57) **Abstract**

A bicycle generator including a coil stator and a magnetic rotor. The coil stator includes a planar support, and an induction coil portion formed by a plurality of series-connected coil units which are evenly spaced along the circumference of the planar support. The magnetic rotor is rotatable relative to and substantially parallel to the coil stator, and includes a permanent magnet having a plurality of magnetic pole pairs formed on its circumference. The number of the coil units in the induction coil portion is equal to the number of the magnetic pole pairs in the magnetic rotor, and the coil units is winded into trapezoid or sector shape, and the span angle of each of the magnetic pole in the magnetic rotor is substantially equal to the span angle of each of the coil units in the coil stator. Alternatively, the bicycle generator may comprises a cylindrical coil stator and a cylindrical magnetic rotor. The coil stator includes a cylindrical support having a first cylindrical surface, and a cylindrical induction coil portion formed by a plurality of series-connected coil units which are evenly spaced on the first cylindrical surface of the cylindrical support in the circumferential direction. The cylindrical magnetic rotor includes a second cylindrical surface and a permanent magnet having a plurality of magnetic pole pairs formed on the second cylindrical surface facing the cylindrical induction coil portion.

## Description

### BACKGROUND OF THE INVENTION

### Field of the invention

This invention relates to a generator, and more particularly, to a generator included in a bicycle having relatively rotatable members.

### Background of the invention

As is well known, a generator (dynamo) installed in a bicycle includes a stator fixed to the frame of the bicycle, and a rotor which can be driven by frictional force produced by a bicycle wheel so as to rotate relative to the stator. Through the relative rotation between the rotor which is usually a magnet and the stator including multiple teeth and slots formed between adjacent teeth for receiving stator coils, electricity generation is carried out to generate a voltage of alternating sine wave. Since the air gap between the tooth and the rotor and the air gap between the slot and the rotor are greatly different from each other, the magnetic property of the stator changes from place to place, which is the so-called "slot effect". When the rotor is assembled into the stator, the "slot effect" results in great reluctance torque which will greatly increase the rider's load and deteriorate the efficiency of the generator. Consequently, this sort of conventional bicycle installed with a prior generator has lost popularity in market today.

### SUMMARY OF THE INVENTION

In view of the aforesaid drawbacks of the conventional bicycle, the object of this invention is to provide a bicycle generator which, when installed on a bicycle, will not increase the rider's load. Besides, the efficiency of the bicycle generator can be improved in comparison with a prior bicycle generator.

In general, a generator converts mechanical energy into electrical energy basing on the electromagnetic induction principle---namely, an electromotive force will be induced in a conductor which moves relative to a magnetic field. Basically, a generator comprises the following primary elements:
(1) magnetic pole(s) establishing a magnetic field;
(2) coil(s) cutting the magnetic field so as to produce an induced electromotive force (emf); and
(3) mechanical energy source enabling the relative motion between the magnetic field and the coil(s).

In specific, magnitude of the induced emf generated by a generator is proportional to the magnetic field density, the number of turns of the coil(s), and the speed of relative motion of the coil(s) or the conductor. This induced emf can be expressed as follows:$\text{E = B × L × V × N (Volt)}$ wherein,
- E :: induced emf (Volt)
- B:: magnetic flux density (Web/square meter)
- L:: length of the conductor (meter)
- V:: speed of the conductor (meter/sec)
- N:: number of turns of the coil(s) (turn)

Basing on the above principle, this invention provides a bicycle generator in which the front wheel of a bicycle is used as the required mechanical energy source, a magnetic rotor is attached to the front wheel for establishing the magnetic field, and a coil stator is fixed to the frame of the bicycle as the coil(s) for cutting the magnetic field so as to produce an induced electromotive force (emf).

A bicycle generator according to the first aspect of the invention comprises: at least one layer of coil stator, including a planar support, and at least one turn of periodical wave-shaped induction coil which is formed by a plurality of series-connected wave-shaped segments and which is attached to and extends circumferentially on the planar support; and a magnetic rotor substantially parallel to the coil stator with a proper air gap being kept between the rotor and the stator, the rotor being rotatable relative to the stator and having a periphery along which is provided with a ring-shaped permanent magnet having multiple magnetic pole pairs of which the number is identical to the number of the wave-shaped segments.

A bicycle generator according to the second aspect of the invention comprises: at least one layer of coil stator, including a cylindrical support, and at least one turn of periodical wave-shaped induction coil which is formed by a plurality of series-connected wave-shaped segments and which is attached to and extends circumferentially on the cylindrical support; and a cylindrical magnetic rotor rotatable relative to the coil stator, including a cylindrical rotor surface which is opposite to the induction coil of the coil stator, and is substantially coaxial with and radially spaced, by a proper radial gap, from the cylindrical support of the coil stator, and a permanent magnet having multiple magnetic pole pairs which are circumferentially arranged on the cylindrical rotor surface and of which the number is identical to the number of the wave-shaped segments.

A bicycle generator according to the third aspect of the invention comprises a coil stator including a planar support, and an induction coil portion formed by a plurality of series-connected coil units which are evenly spaced along the circumference of the planar support; and a magnetic rotor rotatable relative to and substantially parallel to the coil stator, and including a permanent magnet having a plurality of magnetic pole pairs formed on the circumference thereof. The number of the coil units in the induction coil portion is equal to the number of the magnetic pole pairs in the magnetic rotor, and the coil units is winded into trapezoid or sector shape, and the span angle of each of the magnetic pole in the magnetic rotor is substantially equal to the span angle of each of the coil units in the coil stator.

A bicycle generator according to the fourth aspect of the invention comprises a cylindrical coil stator including a cylindrical support having a first cylindrical surface, and a cylindrical induction coil portion formed by a plurality of series-connected coil units which are evenly spaced on the first cylindrical surface of the cylindrical support in the circumferential direction; and a cylindrical magnetic rotor which is substantially coaxial with and radially spaced from the cylindrical coil stator with a constant radial gap therebetween, and rotatable relative to the cylindrical coil stator, and which includes a second cylindrical surface and a permanent magnet having a plurality of magnetic pole pairs formed on the second cylindrical surface facing the cylindrical induction coil portion. The number of the coil units of the cylindrical induction coil portion is equal to the number of the magnetic pole pairs of the cylindrical magnetic rotor. The coil units is winded into rectangular shape, and the span angle of each of the magnetic poles of the cylindrical magnetic rotor is substantially equal to the span angle of each of the coil units in the cylindrical coil stator.

### BRIEF DESCRIPTION OF THE DRAWINGS

The detailed structure, features and characteristics of this invention will be described more clearly with the descriptions of the preferred embodiments in conjunction with the accompanying drawings, in which:
Fig. 1 is an end view showing a bicycle generator according to the first embodiment of this invention and the related part of the bicycle;
Fig. 2 is the front view of Fig. 1;
Fig. 3A is a front view of a coil stator, included in the bicycle generator shown in Figs. 1 and 2, which comprises a single turn of induction coil in one layer;
Fig. 3B is an end view showing a coil stator having a single-layered structure;
Fig. 4A is a front view of another coil stator, included in the bicycle generator shown in Figs. 1 and 2, which comprises two turns of induction coil in one layer;
Fig. 4B is an enlarged view showing a segment of the coil shown in Fig. 4A;
Fig. 4C is an end view showing a coil stator having a double-layered structure;
Fig. 5A is a front view of a magnetic rotor included in the bicycle generator shown in Figs. 1 and 2;
Fig. 5B is an end view of the magnetic rotor shown in Fig. 5A;
Fig. 5C is another possible end view of the magnetic rotor shown in Fig. 5A;
Fig. 5D is a perspective view showing the angular positional relation between the coil stator and the magnetic rotor of the bicycle generator shown in Figs. 1 and 2;
Fig. 6 is a curve showing the angular distribution of the magnetic flux-density generated by the magnetic rotor illustrated in Figs. 5A, 5B and 5C along the circumference of the magnetic rotor;
Fig. 7 shows a generally rectangular pulse wave-shaped voltage induced in the coils of the coil stator illustrated in Fig. 5D when the magnetic rotor rotates;
Fig. 8 shows a sine wave-shaped voltage generated by a conventional bicycle generator;
Fig. 9 shows the wave shape of the voltage generated by a bicycle generator of this invention in comparison with that generated by a conventional bicycle generator;
Fig. 10 schematically shows a coil stator together with a rectifier and a capacitor provided intermediate a pair of lead wires connected between the coil stator and an outer load;
Fig. 11 is an exploded perspective view showing a bicycle generator according to the second embodiment of this invention;
Fig. 12A is a front view of a coil stator included in a bicycle generator according to the third embodiment of this invention;
Fig. 12B is an enlarged view showing a coil unit included in the coil stator illustrated in Fig. 12A ; and
Fig. 13 is an exploded perspective view showing a bicycle generator according to the fourth embodiment of this invention.

### DETAILED DESCRIPTION OF PREFERRED EMBODIMENTS

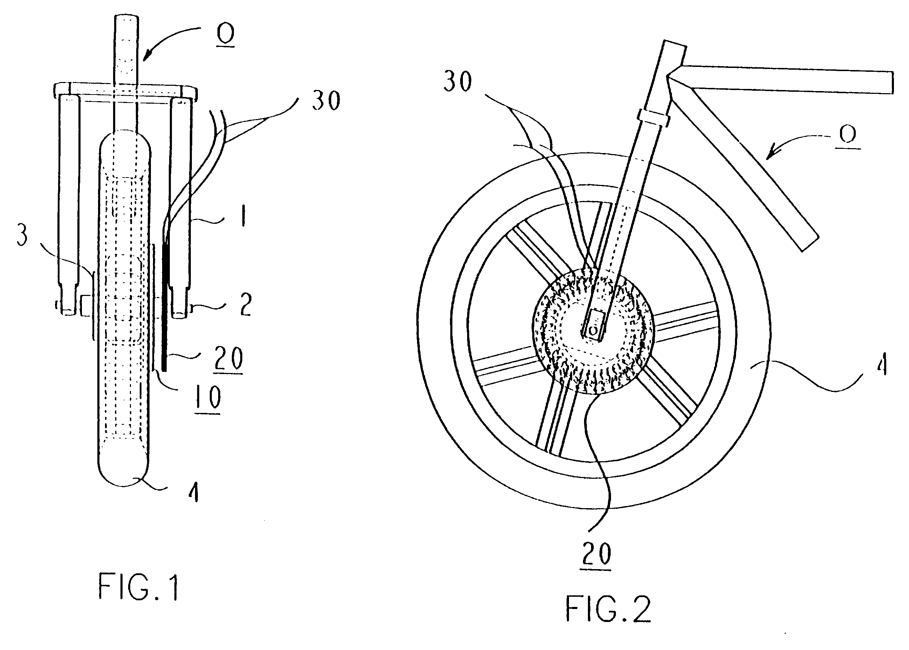

Figs. 1 and 2 are, respectively, the end view and front view of a generator according to the first embodiment of this invention, which is installed in a bicycle having relative rotatable members. As can be seen from these two figures, the front wheel of a common bicycle is constituted by a front axle 2 fixed to the lower end of the front fork 1 of the bicycle frame 0, and a revolving assembly rotatably supported by the front axle 2. The revolving assembly includes a hub 3 and a tire 4 etc. Next, the way how a bicycle generator of this invention is installed on the front axle 2 and the revolving assembly will be explained.

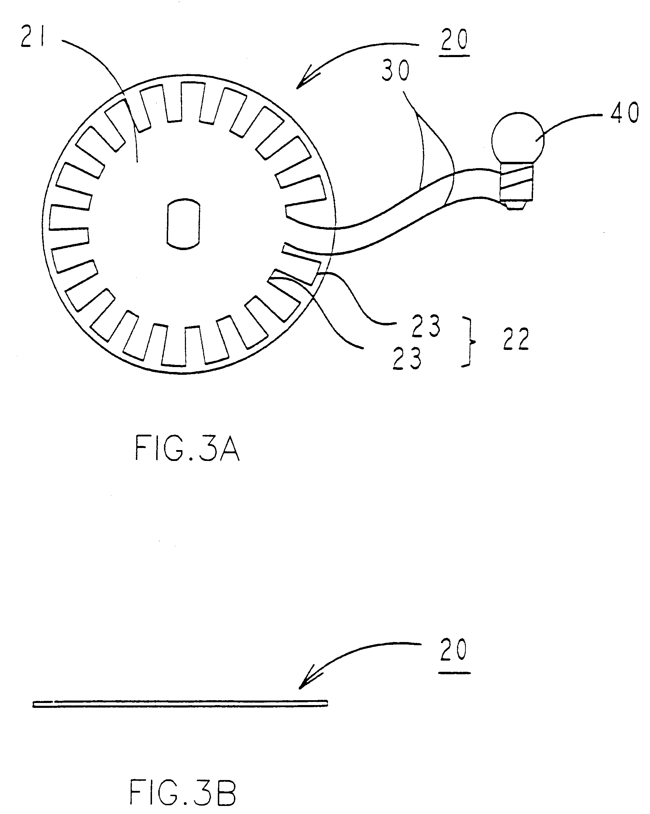

This bicycle generator mainly includes a magnetic rotor 10 attached to the hub 3, a coil stator 20 fixed to the front axle 2, and a pair of lead wires 30 connected between the coil stator 20 and an outer load such as a bicycle lamp (see Figs. 3A, 4A and 10) for supplying electrical energy to the latter.

Fig. 3A shows the construction of a simplest type of coil stator 20 in the bicycle generator according to the first embodiment of this invention. This coil stator 20 includes a disc-shaped support 21 made of soft magnetic materials and a coil 22 made of copper or other conductive materials which is formed on the support 21 by, for example, etching. This coil 22 consists of a single turn formed by a plurality of series-connected segments 23, each having a shape of rectangular pulse wave. The two ends of this coil 22 are connected to an outer load 40 through a pair of lead wires 30. Fig. 3B shows that this coil stator 20 can be constituted by only one layer.

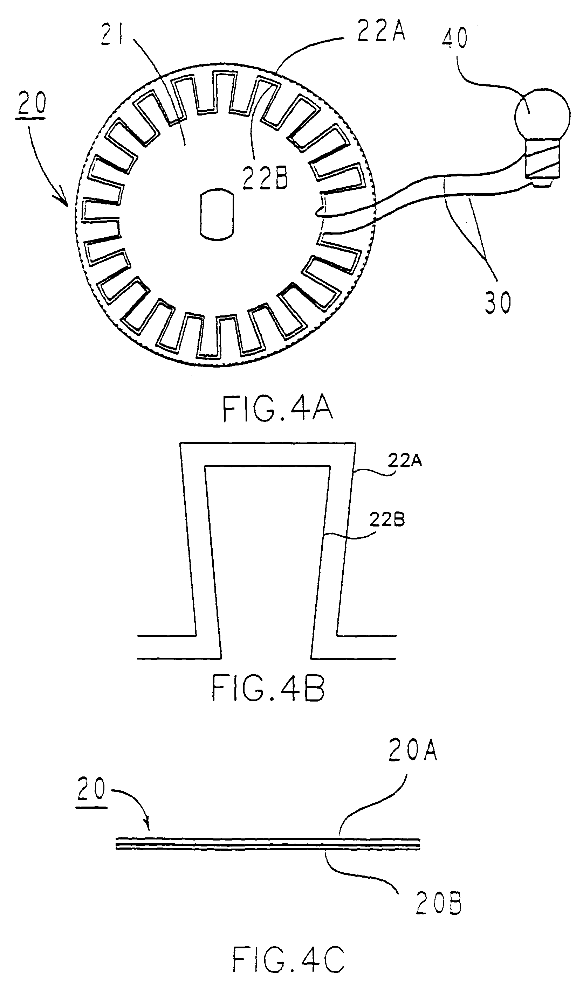

Fig. 4A shows the construction of another type of coil stator 20 in the generator of this invention. Slightly different from the above-described simplest type of coil stator including a single turn of induction coil (see Fig. 3A), this coil stator 20 has a coil 22 including two turns 22A and 22B of induction coils (Figs. 4A and 4B) which are formed on the same support 21, electrically isolated, and overlapped in radial direction. The tail end of the outer turn 22A is connected to the head end of the inner turn 22B so as to make the flowing directions of current in the inner and outer turns 22A, 22B consistent with each other. In addition, the head end of the outer turn 22A and the tail end of the inner turn 22B are connected to the lead wires 30, respectively. Fig. 4B shows a segment 23 of the coil 22.

Fig. 4C shows the construction of yet another type of coil stator 20 in the bicycle generator of this invention. In comparison with the coil stator shown in Fig. 3B, it can be found that this coil stator 20 includes two superimposed and isolated layers 20A, 20B on which are arranged induction coils connected to each other only at their ends.

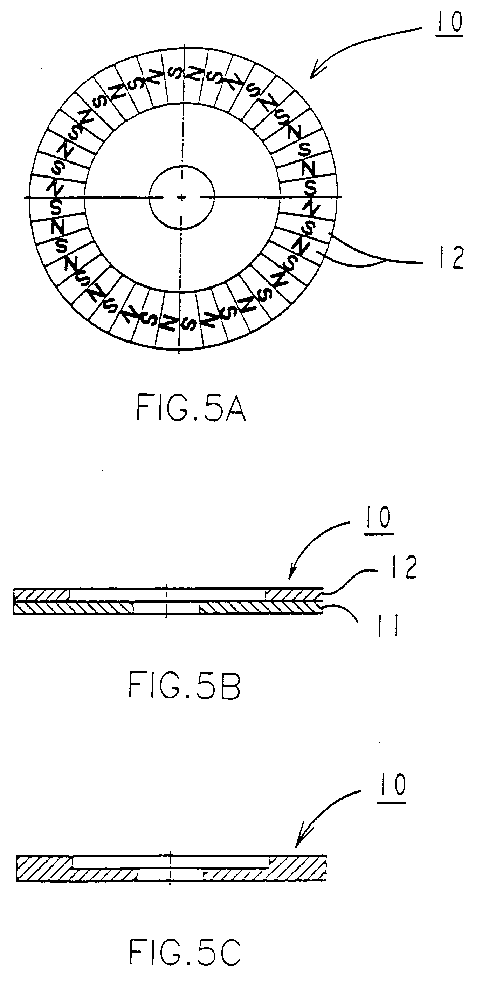

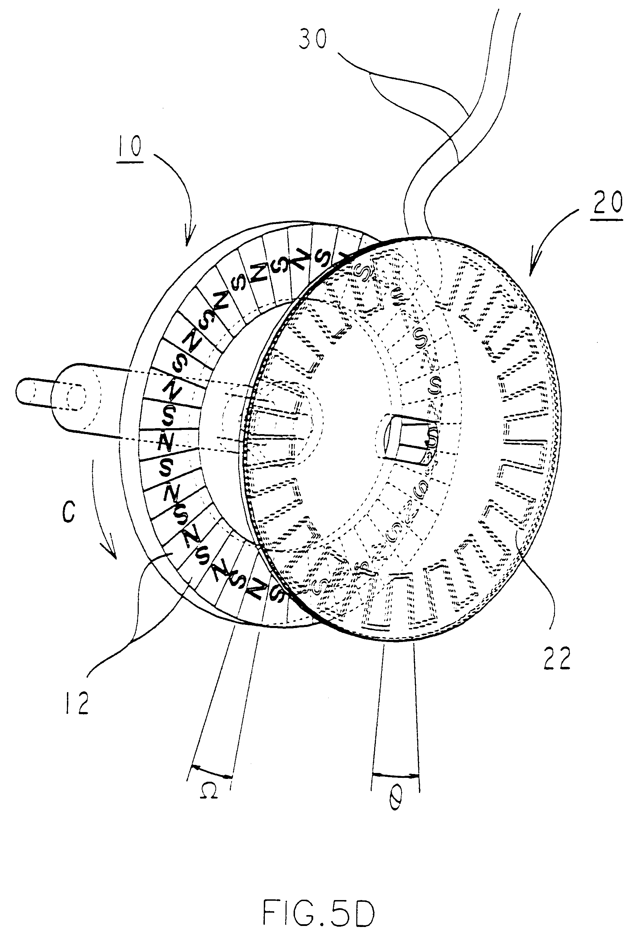

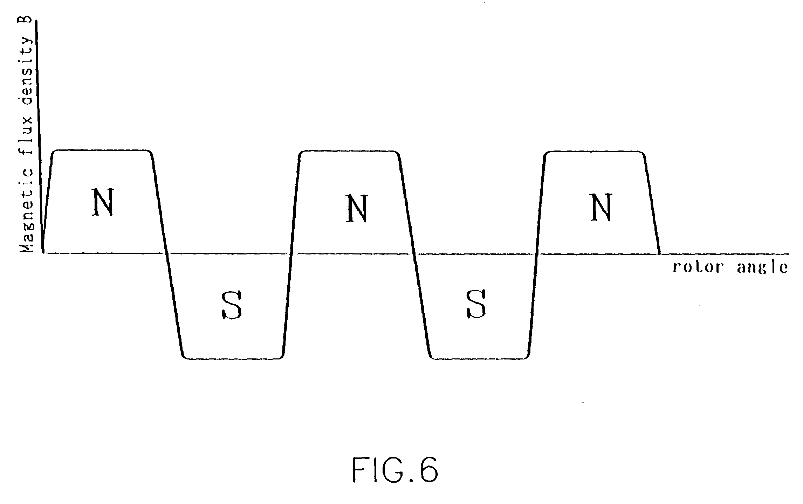

As shown in Figs. 5A and 5B, the magnetic rotor 10 includes a disk-shaped frame 11, and a permanent magnet having multiple magnetic poles N, S, N, S, --- 12 which is attached onto the circumference of the frame 11. The number of the magnetic pole N or S in the magnetic rotor 10 is equal to the number of the segments 23 in the coil 22. Alternatively, the permanent magnet and the frame 11 may be integrally formed ( see Fig. 5C). As can be seen from Figs. 1 and 5D, when installed on a bicycle, the magnetic rotor 10 is substantially parallel to the coil stator 20 with a proper air gap being kept between the rotor 10 and the stator 20. The rotor 10 can be rotated relative to the stator 20 in the direction of arrow C. Since the magnetic rotor 10 has a rather small magnetic pole span angle Ω, namely the width of each magnetic pole 12 is rather small, the angular distributi0on of the magnetic flux density B along the circumference of the magnetic rotor 10 is near the shape of a rectangular pulse wave (see Fig. 6).

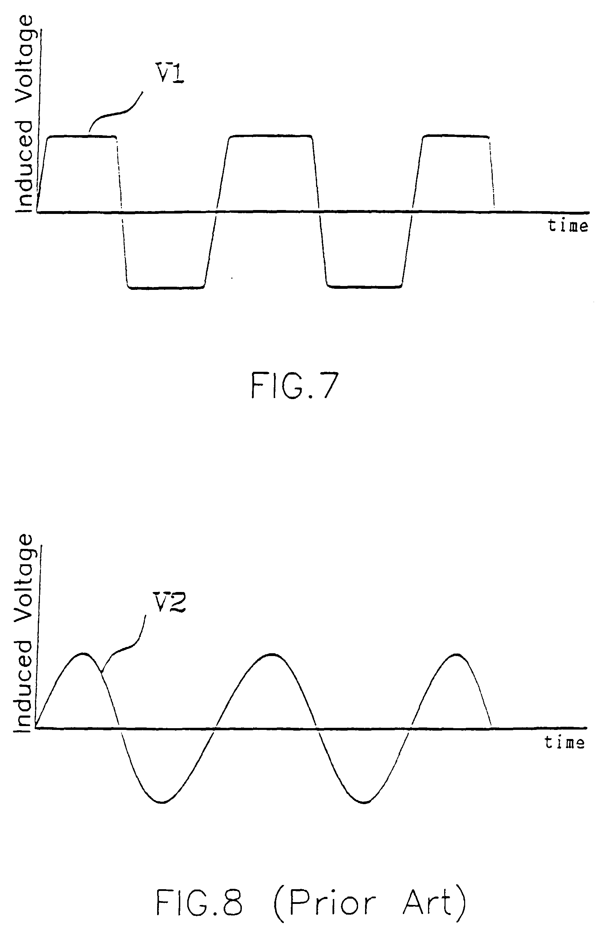

The magnetic pole span angle Ω of the magnetic rotor 10 is made to be substantially identical to the span angle θ of each segment in the induction coils 22. Consequently, in the case when the magnetic rotor 10 and the coil stator 20 are installed on the hub 3 and the axle 2 respectively (see Fig. 1), and the magnetic rotor 10 revolves together with the hub 3, a nearly rectangular pulse wave-shaped voltage V1(see Fig. 7) can be induced in the induction coils 22 of the coil stator 20 due to the fact that the coils 22 cut the magnetic field produced by the magnetic rotor 10.

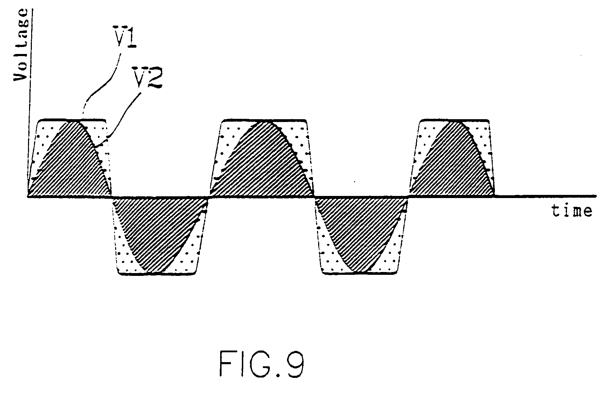

Referring to Fig. 9, the induced voltage V1, having a nearly rectangular pulse wave shape (see Fig. 7), produced by the generator of this invention is compared with the voltage V2, having a sine wave shape ( see Fig. 8), produced by a conventional generator. It can be readily found that the former voltage V1 has a valid voltage wave area larger than that of the latter voltage V2. In other words, the generator of this invention has a better efficiency in electricity generation. Besides, in the above-described generator, since both the rotor and the stator are of planar shapes and are parallel to each other, the air gap between them keeps constant. Consequently, no "slot effect" problem or reluctance torque problem occurs in a generator of this invention. Thus, the rider's load can be reduced and the efficiency of generator can be greatly improved in comparison with a conventional bicycle generator as described above.

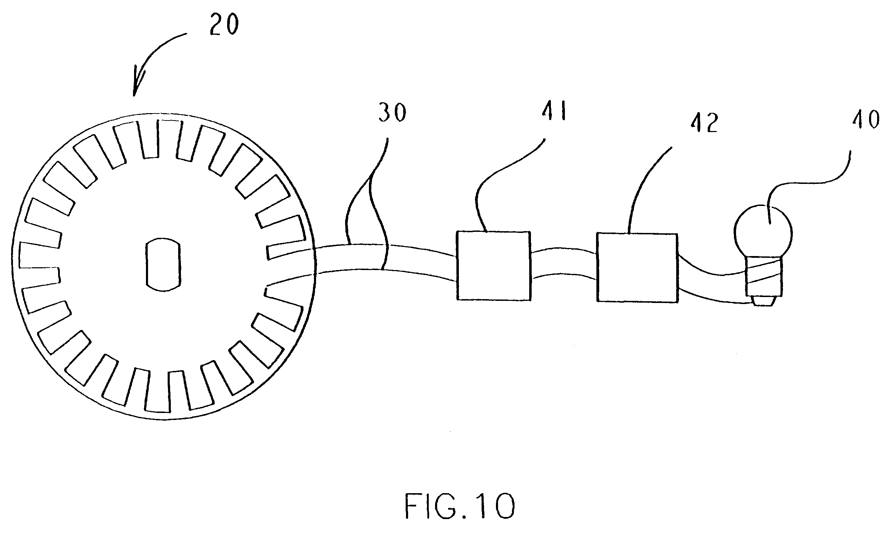

Preferably, a rectifier 41 and a capacitor 42 are further provided intermediate the pair of lead wires 30 connected between the induction coils 22 and an outer load 40 (see Fig. 10) so as to stabilize the current supplied by the generator and to avoid interruption of current supply when the bicycle stops.

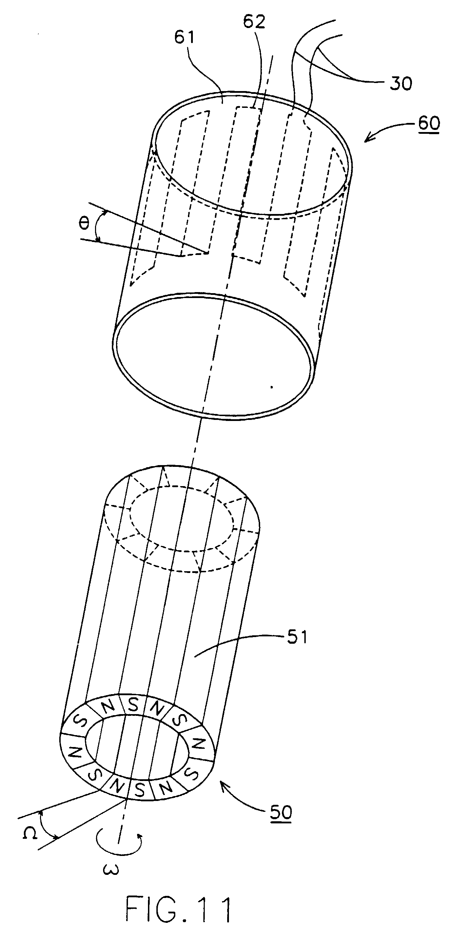

Next, the second embodiment of this invention is described with reference to Fig. 11. The generator according to this embodiment includes a cylindrical magnetic rotor 50 and at least one layer of coil stator 60. Each layer of the coil stator 60 includes a cylindrical support 61 made of soft magnetic materials, and at least one turn of periodical wave-shaped induction coil 62 which is attached to and extends circumferentially on the surface of the cylindrical support 61. The two ends of the induction coil 62 are connected to an outer load ( not shown) through a pair of lead wires 30.

Though the coil stator 60 shown in Fig. 11 includes only a single layer of periodical wave-shaped induction coil 62, this coil stator 60 may alternatively include a plurality of induction coils 62 which are arranged on multiple coaxial cylindrical layers and are connected together. Besides, the at least one turn of induction coil 62 of the coil stator 60 may include a plurality of different turns of induction coil 62 which are arranged on the same layer of coil stator 60 and are connected together.

The cylindrical magnetic rotor 50 is substantially coaxial with and radially spaced, by a proper radial gap, from the cylindrical support 61 of the coil stator 60, and may rotate relative to the coil stator 60 in the direction of arrow ω. The magnetic rotor 50 has a cylindrical rotor surface, opposite to the induction coil 62 of the coil stator 60, on which is provided a permanent magnet having a plurality of circumferentially arranged magnetic poles N, S, N, S, --- 51. Just like the case of the first embodiment, each turn of periodical wave-shaped induction coil includes a plurality of rectangular pulse-shaped segments connected in series, and each magnetic pole 51 in the magnetic rotor 50 has a magnetic pole span angle Ω substantially identical to the span angle ω of each segment in the induction coil 62.

Similar to the first embodiment, the magnetic rotor 50 may comprise a separate frame (not shown) onto which is attached the permanent magnet. Besides, a rectifier and a capacitor may preferably be provided intermediate the pair of lead wires 30 connected between the induction coil 62 and an outer load so as to stabilize the current supply.

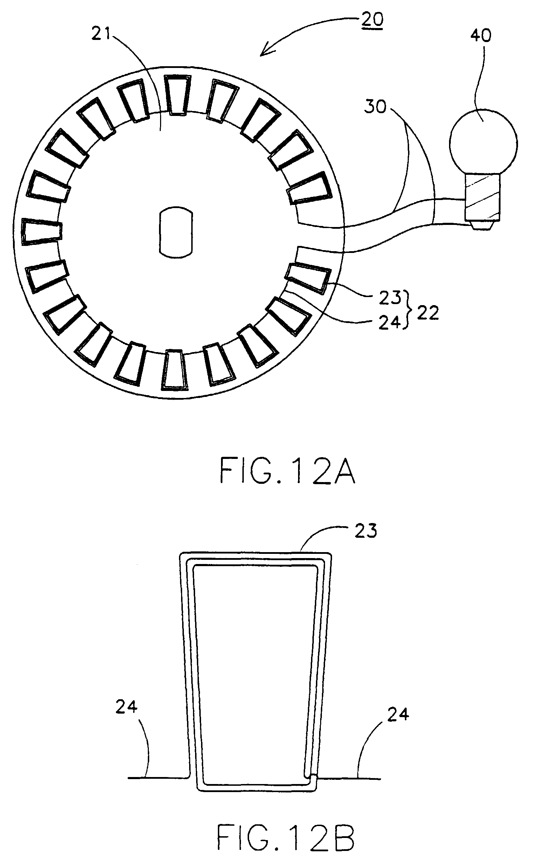

Next, the third embodiment of this invention will be described by referring to Figs. 12A and 12B. Similar to the bicycle generator of the first embodiment, bicycle generator of the third embodiment also includes a magnetic rotor 10, which is exactly the same as that used in the first embodiment and shown in Figs. 5A through 5C, and a disk-shaped coil stator 20. Referring to Fig. 12A, the coil stator 20 includes a disk-shaped planar support 21, an induction coil portion 22 formed by a plurality of series-connected coil units 23 which are evenly spaced along the circumference of the planar support 21, and a pair of lead wires 30 which connect the terminals of the induction coil portion 22 and the external load 40. Adjacent coil units 23 are connected to each other by lines 24 between them. Fig. 12B is an enlarged view showing the structure of a coil unit 23 included in the coil stator 20 illustrated in Fig. 12A. As shown in this figure, a coil unit 23 is composed of several coil loops, each loop being winded into a trapezoid or sector shape. The number of coil units 23 of the induction coil portion 22 is the same as the number of magnetic pole pairs 12 of the magnetic rotor 10 (see Fig. 5A). Though each coil unit 23 is illustrated to include three loops in Fig. 12B, the loop number of a coil unit 23 certainly need not be limited to three.

While the bicycle generator according to the third embodiment is similar to that according to the first embodiment in the function thereof, the ways of forming the coil stators and particularly the induction coil portions are completely different. In comparison with the case of the first embodiment wherein the coil 22 of the coil stator 20 is formed on the support 21 by etching as described above, in the case of the third embodiment, all the coil units 23 constituting the induction coil portion 22 may be formed one by one by automatic winding operation. Thus, the whole coil stator 20 may be produced by an automatic manufacturing process at high speed.

Besides, a rectifier and a capacitor (not shown) may preferably be provided intermediate the pair of lead wires 30 connected between the circular induction coil 22 and an outer load 40 so as to stabilize the current supply.

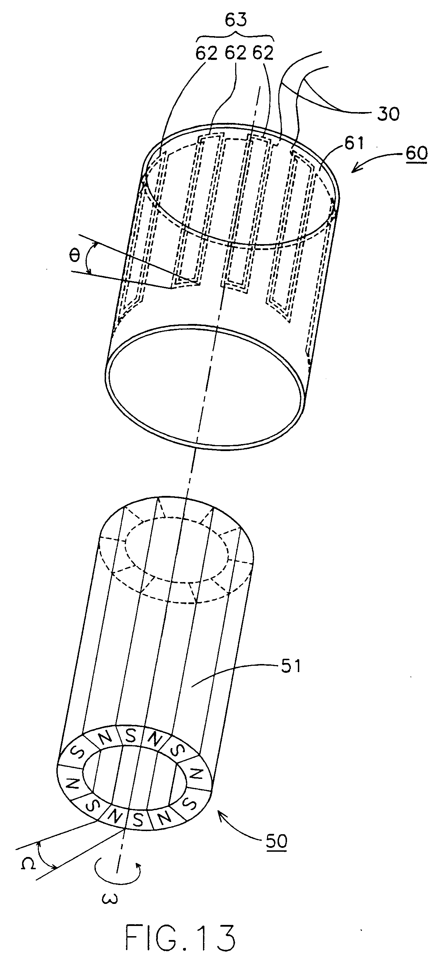

Next, the fourth embodiment of this invention will be described by referring to Fig. 13. Similar to the bicycle generator of the second embodiment, bicycle generator of the fourth embodiment also includes a cylindrical magnetic rotor 50, which is exactly the same as that used in the second embodiment and shown in Fig. 11, a cylindrical coil stator 60, and a pair of lead wires 30 which connect the terminals of the cylindrical induction coil portion 62 and an external load (not shown).

The cylindrical coil stator 60 includes a cylindrical support 61 having a first cylindrical surface, and a cylindrical induction coil portion 63 formed by a plurality of series-connected coil units 62 (only five coil units 62 are shown in Fig. 10) which are evenly spaced on the first cylindrical surface of the cylindrical support 61 in the circumferential direction. Though each coil unit 62 is illustrated to include three substantially rectangular loops in Fig. 13, the loop number of a coil unit 62 certainly need not be limited to three.

Similar to the case of the third embodiment, all the coil units 62 constituting the induction coil portion 63 may be formed one by one by automatic winding operation. Thus, the whole coil stator 60 may be produced by an automatic manufacturing process at high speed.

Besides, a rectifier and a capacitor (not shown) may preferably be provided intermediate the pair of lead wires 30 connected between the induction coil portion 63 and an outer load so as to stabilize the current supply.

The aforesaid preferred embodiments of the invention are used only for illustrating and not for limiting this invention. Variations and modifications may be made without departing from the scope of the invention. Therefore, the scope of this invention is defined by the following appended claims.

## Claims

1. A bicycle generator comprising:
a coil stator including a planar support and an induction coil portion; and
a magnetic rotor rotatable relative to and substantially parallel to said coil stator, and including a permanent magnet having a plurality of magnetic pole pairs formed on the circumference thereof;
characterized in:
that said induction coil portion is formed by a plurality of series-connected coil units which are evenly spaced along the circumference of said planar support; and that the number of said coil units in said induction coil portion is equal to the number of said magnetic pole pairs in said magnetic rotor.

2. A bicycle generator as described in claim 1 wherein said coil units is winded into trapezoid or sector shape, and the span angle of each of said magnetic pole in said magnetic rotor is substantially equal to the span angle of each of said coil units in said coil stator.

3. A bicycle generator comprising:
a cylindrical coil stator including a cylindrical support having a first cylindrical surface, and a cylindrical induction coil portion; and
a cylindrical magnetic rotor which is substantially coaxial with and radially spaced from said cylindrical coil stator with a constant radial gap therebetween, and rotatable relative to said cylindrical coil stator, and which includes a second cylindrical surface and a permanent magnet having a plurality of magnetic pole pairs formed on said second cylindrical surface facing said cylindrical induction coil portion;
characterized in:
that said cylindrical induction coil portion is formed by a plurality of series-connected coil units which are evenly spaced on said first cylindrical surface of said cylindrical support in the circumferential direction; and that the number of said coil units of said cylindrical induction coil portion is equal to the number of said magnetic pole pairs of said cylindrical magnetic rotor.

4. A bicycle generator as described in claim 3 wherein said coil units is winded into rectangular shape, and the span angle of each of the magnetic poles of said cylindrical magnetic rotor is substantially equal to the span angle of each of said coil units in said cylindrical coil stator.

5. A bicycle generator comprising:
a coil stator including a planar support and at least one turn of periodical wave-shaped induction coil which is formed by a plurality of series-connected wave-shaped segments and which is attached to and extends circumferentially on said planar support; and
a magnetic rotor substantially parallel to said coil stator with a proper air gap being kept between said rotor and said stator, said rotor being rotatable relative to said stator and having a periphery along which is provided with a ring-shaped permanent magnet having multiple magnetic pole pairs of which the number is identical to the number of said wave-shaped segments.

6. A bicycle generator as described in claim 5 wherein said at least one turn of periodical wave-shaped induction coil comprises different turns of induction coils which are connected together.

7. A bicycle generator as described in claim 5 or 6 wherein each turn of said periodical wave-shaped induction coil comprises a plurality of series-connected segments, each having a shape of rectangular pulse wave; and wherein each said magnetic pole in said magnetic rotor has a magnetic pole span angle substantially identical to the span angle of each said segment of said induction coil.

8. A bicycle generator comprising:
a coil stator including a cylindrical support and at least one turn of periodical wave-shaped induction coil which is formed by a plurality of series-connected wave-shaped segments and which is attached to and extends circumferentially on said cylindrical support; and
a cylindrical magnetic rotor rotatable relative to said coil stator, including a cylindrical rotor surface which is opposite to said induction coil of said coil stator, and is substantially coaxial with and radially spaced, by a proper radial gap, from said cylindrical support of said coil stator, and a permanent magnet having multiple magnetic pole pairs which are circumferentially arranged on said cylindrical rotor surface and of which the number is identical to the number of said wave-shaped segments.

9. A bicycle generator as described in claim 8, wherein said at least one turn of periodical wave-shaped induction coil comprises a plurality of different turns of induction coils connected together.

10. A bicycle generator as described in claim 8 or 9 wherein each turn of said periodical wave-shaped induction coil comprises a plurality of rectangular pulse-shaped segments connected in series, and wherein each said magnetic pole in said magnetic rotor has a magnetic pole span angle substantially identical to the span angle of each said segment in said induction coil.
